# EUROPÄISCHE PATENTSCHRIFT

(11) **EP 2 322 385 B1**
(45) Veröffentlichungstag und Bekanntmachung des Hinweises auf die Patenterteilung: **25.02.2015**
(21) Anmeldenummer: 09175415.0
(22) Anmeldetag: 09.11.2009
(51) Int. Cl.: B60R 16/02, C09J 7/04

(54) **Quereinreißbares Gewebeklebeband mit hoher Abriebfestigkeit**
Tissue adhesive band with high wear resistance that can be removed by ripping crosswise
Bande adhésive de tissu à déchirement transversal ayant une résistance à la friction élevée

(43) Veröffentlichungstag der Anmeldung: 18.05.2011
(60) Teilanmeldung: 13181738.9
(73) Patentinhaber: Coroplast Fritz Müller GmbH & Co. KG, 42279 Wuppertal (DE)
(72) Erfinder: Lodde, Christoph, 59439 Holzwickede (DE); Wittig, Gülay, 44799 Bochum (DE)
(74) Vertreter: Zapf, Christoph

(56) Entgegenhaltungen:
- EP-A1- 1 074 595
- EP-A1- 1 911 633
- EP-A2- 2 050 803
- US-A- 5 698 477

## Beschreibung

Die vorliegende Erfindung betrifft ein Gewebeklebeband nach dem Oberbegriff des Anspruchs 1, insbesondere ein Kabelwickelband, bestehend aus einem bandförmigen Gewebeträger mit einer mindestens einseitigen Klebebeschichtung, wobei der Gewebeträger aus Kettfäden und Schussfäden hergestellt ist und die Fadenstärke (Titer) in dtex der Schussfäden größer ist als die Fadenstärke (Titer) in dtex der Kettfäden sowie die auf die Breite bezogene Fadenstärke in dtex/cm der Kettfäden kleiner ist als die auf die Länge bezogene Fadenstärke in dtex/cm der Schussfäden.

Aus der EP 1 074 595 B1 ist ein Klebeband bekannt, in dessen Gewebeträger die Anzahl der Kettfäden 30 bis 50 pro cm beträgt und die auf die Breite bezogene Fadenstärke kleiner als 2.500 dtex/cm ist. Die Anzahl der Schussfäden beträgt 18 bis 27 pro cm. Hierbei werden die Kettfäden durch die Klebebeschichtung gegenüber den Schussfäden fixiert, so dass die Reißfestigkeit in Querrichtung kleiner ist als 10 N. Ein derartiges Klebeband besitzt zwar eine hinreichende Quereinreißbarkeit von Hand, besitzt aber den Nachteil, dass auf Grund einer niedrigen Webdichte eine Verschiebung der Schussfäden auftritt, weshalb es notwendig ist, die Kettfäden und die Schussfäden durch die Klebebeschichtung gegeneinander zu fixieren, worunter die Flexibilität leidet. Weiterhin wird nur eine geringere Abriebbeständigkeit gewährleistet, und zwar entsprechend der Abriebklasse A oder B nach LV 312. Die Abriebklassen nach LV 312 werden wie folgt unterteilt:

### Einteilung der Abriebklassen nach LV 312

| Abriebklasse | Anforderung am 5 mm Dorn |
|---|---|
| A kein Abriebschutz | < 100 Hübe |
| B geringer Abriebschutz | 100 - 499 Hübe |
| C mittlerer Abriebschutz | 500 - 999 Hübe |
| D hoher Abriebschutz | 1000 - 4999 Hübe |
| E sehr hoher Abriebschutz | ≥ 5000 - 14999 Hübe |
| F extrem hoher Abriebschutz | ≥ 15.000 Hübe |

Aus der EP 1 990 393 A1 ist ein Klebeband bekannt, das aus einem Gewebeträger besteht, bei dem die Anzahl der Kettfäden 30 bis 50 beträgt und die auf die Breite bezogene Stärke der Kettfäden 2.950 dtex/cm ist sowie die Stärke der Schussfäden in Bezug auf die Bandlänge 5.200 dtex/cm ist. Bei diesem Band ist eine zusätzliche Fixierung der Kett- und Schussfäden zueinander erforderlich. Auch ein derartiges Klebeband ist gut handeinreißbar, besitzt aber nur eine geringe Abriebbeständigkeit, und zwar der Klasse A nach LV 312. Eine in der nachstehenden Tabelle 2 enthaltene ähnliche Ausführungsform ist unter dem Namen Coroplast 839 bekannt und stellt ein Klebeband der gattungsmäßen Art dar.

Der vorliegenden Erfindung liegt die Aufgabe zu Grunde, ausgehend von einem Klebeband der eingangs beschriebenen Art, dieses derart zu verbessern, dass eine gute Verbundfestigkeit ohne zusätzliche Fixierungsmaßnahmen der Kett- und Schussfäden vorhanden ist und somit eine gute Handeinreißbarkeit erreicht wird sowie eine Abriebbeständigkeit gemäß den Klassen C oder D nach LV 312 erreicht wird.

Erfindungsgemäß wird dies mit einem Klebeband gemäß Anspruch 1 erreicht.

Die Erfindung basiert auf der Erkenntnis, dass durch die erfindungsgemäße längenbezogene Fadenstärke der Schussfäden bzw. die erfindungsgemäße Fadenstärke der Schussfäden, die jeweils mindestens etwa das vierfache der erfindungsgemäßen breitenbezogenen Fadenstärke der Kettfäden bzw. der Fadenstärke der Kettfäden beträgt, auch ohne eine Fixierung der Fäden durch die Klebebeschichtung an ihren Kreuzungsstellen eine ausreichende Verbundfestigkeit des Trägergewebes erzielt wird, die eine gute Handeinreißbarkeit, d. h., die Handeinreißbarkeit in Richtung der Schussfäden, sicherstellt. Gleichzeitig wird durch die erfindungsgemäße Fadenstärke der Schussfäden eine Abriebfestigkeit gemäß der Klasse größer/gleich C, insbesondere D gemäß LV 312 ermöglicht.

Vorteilhafterweise bestehen die Kett- und Schussfäden aus Polyester (PET), so dass das Gewebe verrottungsfest ist. Alternativ können auch Schussfäden aus Polyamid (PA) verwendet werden.

Weitere vorteilhafte Ausführungen der Erfindung sind in den Unteransprüchen enthalten und werden an Hand der folgenden Ausführungsbeispiele und der beiliegenden Zeichnungen näher erläutert. Dabei zeigen:
- Fig. 1: einen Grundaufbau eines erfindungsgemäßen Gewebeträgers und
- Fig. 2: einen Schnitt durch ein erfindungsgemäßes Klebeband mit einem Gewebeträger gemäß Fig. 1.

In den verschiedenen Figuren der Zeichnung sind gleiche Teile stets mit denselben Bezugszeichen versehen, so dass sie in der Regel auch jeweils nur einmal beschrieben werden.

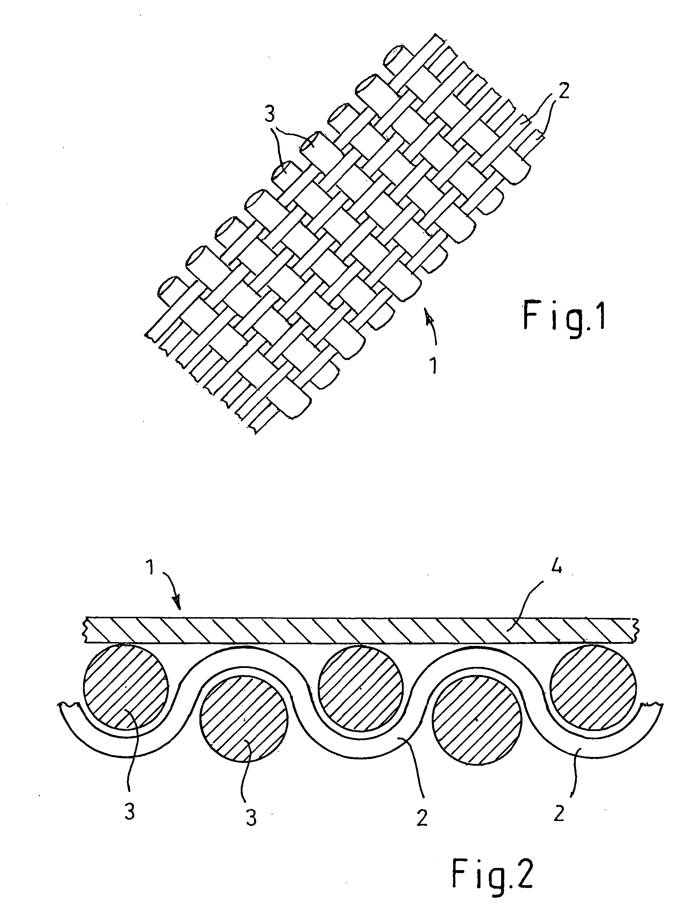

Wie in Fig. 1 dargestellt ist, besteht ein erfindungsgemäßer Gewebeträger 1, der bandförmig ausgebildet ist, d. h. dessen Länge größer ist als dessen Breite, aus einem Gewebe aus in Bandlängsrichtung verlaufenden Kettfäden 2 sowie aus quer zu den Kettfäden 2, insbesondere senkrecht zu den Kettfäden 2 verlaufenden Schussfäden 3. Die längenbezogene Fadenstärke dtex/cm der Schussfäden 3 beträgt das vier- bis fünffache der breitenbezogenen Fadenstärke dtex/cm der Kettfäden 2, wobei die auf die Breite bezogene Fadenstärke der Kettfäden 2 ca. 2.000 bis 4.000 dtex/cm und die auf die Länge bezogene Fadenstärke der Schussfäden 3 ca. 8.000 bis 20.000 dtex/cm beträgt. Die Fadenstärke der Schussfäden 3 ist größer 400 dtex, insbesondere 550 dtex. Hierbei handelt es sich um ein übliches Gewebe. Der erfindungsgemäße Gewebeträger 1 kann vorteilhafterweise bereits gewaschen, thermofixiert bzw. fixiert und kalandriert sein. Die erfindungsgemäß verwendeten Kettfäden 2 und Schussfäden 3 können als Monofil-Fäden ausgebildet sein oder aber als sogenanntes Filamentgarn, bei dem mehrere Fasern versponnen sind und den einzelnen Kett- bzw. Schussfaden 2, 3 bilden. Die erfindungsgemäßen Kett- und Schussfäden 2, 3 können durch eine faserspezifische Veredlung, eine sogenannte Texturierung in ihren textilen Eigenschaften verbessert sein. Bei der Texturierung erhalten die ursprünglich glatten Filamente unter Ausnutzung Ihrer thermoplastischen Eigenschaften durch mechanischthermische, chemisch-thermische oder mechanische Verfahren ein größeres Volumen, eine höhere Elastizität und Dehnbarkeit, eine gesteigerte Bauschkraft bzw. ein erhöhtes Wärmerückhaltevermögen durch höheren Lufteinschluss, eine hohe Luftdurchlässigkeit, ein höheres Feuchtigkeitsaufnahmevermögen durch Verteilung der Wassertropfen in den Kräuselbögen der texturierten Fasern. Vorteilhafterweise sind die erfindungsgemäß verwendeten Kett- und/oder Schussfäden 2, 3 aus Filamentgarnen gebildet, die durch lntermingeln weiterverarbeitet sind. Hierbei wird den Filamentgarnen eine zusätzliche Drehung (auch Schutzdrall genannt) aufgebracht, um das einzelne Filament vor Beschädigungen zu schützen und bereits gebrochene Kapilare zum Aufschieben zu Flusen zu verhindern. Bei dem Intermingelingverfahren handelt es sich um ein Luftverwirbelungsverfahren, bei der das Filamentgarn bei der Bewegung durch eine Düse mit Pressluft verwirbelt wird. Die erfindungsgemäßen Kett- und Schussfäden 2, 3 bestehen vorzugsweise aus Polyester, jedoch können auch andere synthetische Chemiefasern Verwendung finden.

In Fig. 2 ist ein Schnitt durch ein erfindungsgemäßes Klebeband dargestellt, woraus zu erkennen ist, dass auf dem textilen Gewebeträger 1 eine Klebebeschichtung 4 oberflächlich, d. h. mit geringer Eindringtiefe in den Gewebeträger 1 aufgebracht ist. Hierbei handelt es sich vorteilhafterweise um einen Acrylatkleber. Das Klebstoffgewicht der Klebebeschichtung beträgt vorteilhafterweise 75 bis 80 g/qm. In der nachfolgenden Tabelle 1 sind Ausführungsbeispiele eines Klebebandes aufgeführt. Hieraus ergibt sich, dass einerseits das erfindungsgemäße Klebeband gemäß Beispiel 8 und 9 eine hohe Abriebfestigkeit gemäß LV 312 besitzt, und zwar im Wesentlichen eine Abriebfestigkeit der Klasse D sowie eine geringe Reißdehnung sowie Bruchkraft, so dass eine gute Handeinreißbarkeit gegeben ist. Die Dicke eines beispielhaften Klebebandes beträgt zwischen 0,25 bis 0,30 mm, insbesondere 0,25 bis 0,27 mm, und zwar einschließlich der aufgebrachten Klebebeschichtung 4. Grundsätzlich bestehen hier die Möglichkeiten, den Schussfaden 3 als Einzelfaden (siehe hierzu Beispiel 1 der nachfolgenden Tabelle 1) oder in Kombination mit mehreren Fäden aufzubringen. Wie sich insbesondere aus den Ausführungen gemäß Beispiel 4 und 5 ergibt, liegt es im Rahmen der Möglichkeiten, den Schussfaden 3 aus mehreren Einzelfäden insbesondere unterschiedlicher Fadenstärke herzustellen, wobei beispielsweise der Schussfaden 3 gemäß der Ausführung 4 aus zwei Einzelfäden bestehen kann, und zwar einem Einzelfaden mit 220 dtex Fadenstärke und einem Einzelfaden mit 330 dtex Fadenstärke, so dass sich eine Gesamtfadenstärke von 550 dtex ergibt. Im Ausführungsbeispiel 5 werden die Schussfäden 3 aus drei Einzelfäden gebildet, wobei ein Einzelfaden eine Fadenstärke von 220 dtex (nominelle Fadenstärke) besitzt und die beiden anderen Einzelfäden jeweils eine Fadenstärke von 167 dtex (nominelle Fadenstärke), woraus sich eine Gesamtfadenstärke von 550 dtex (nominelle Schussfadenstärke) ergibt.

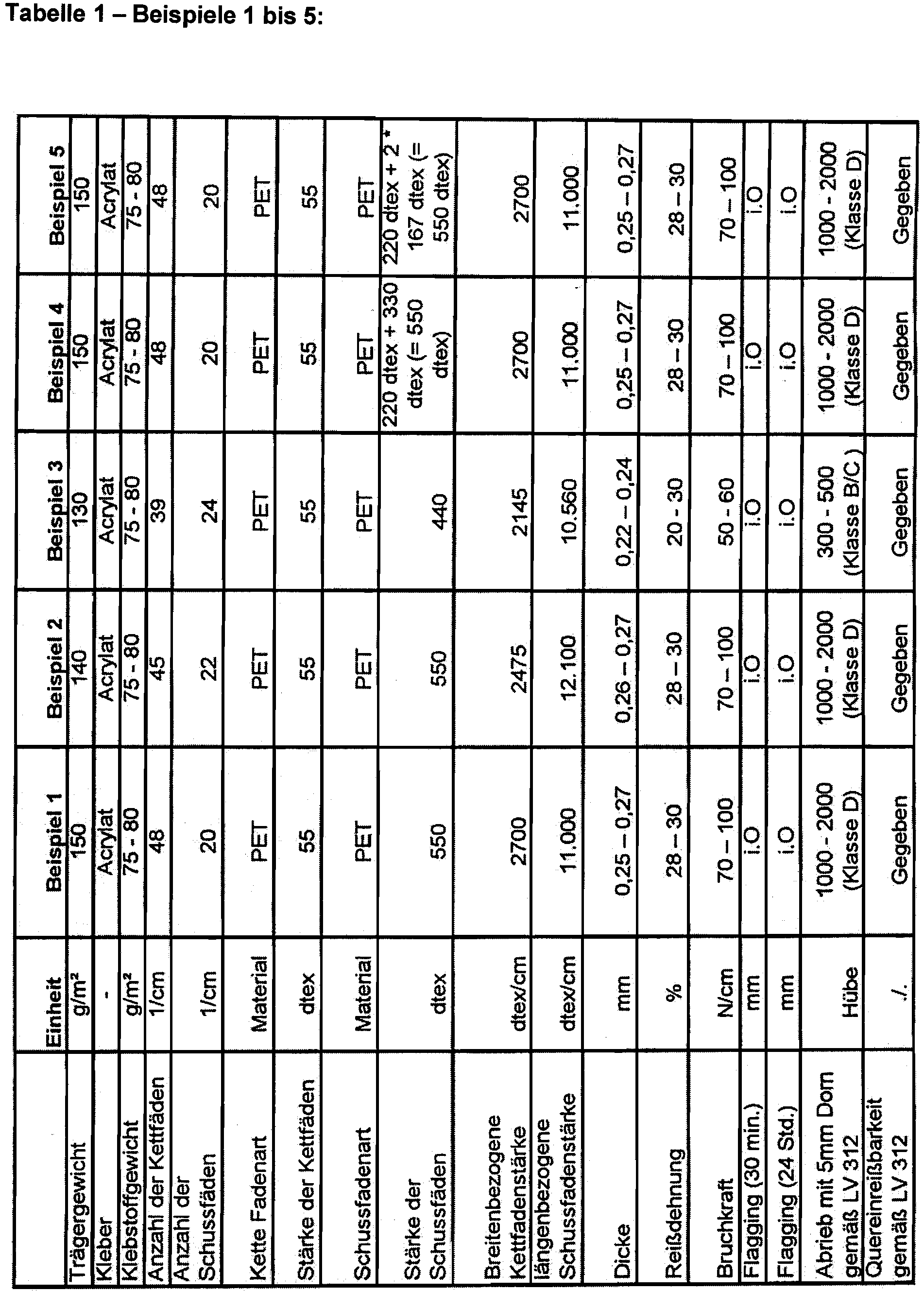

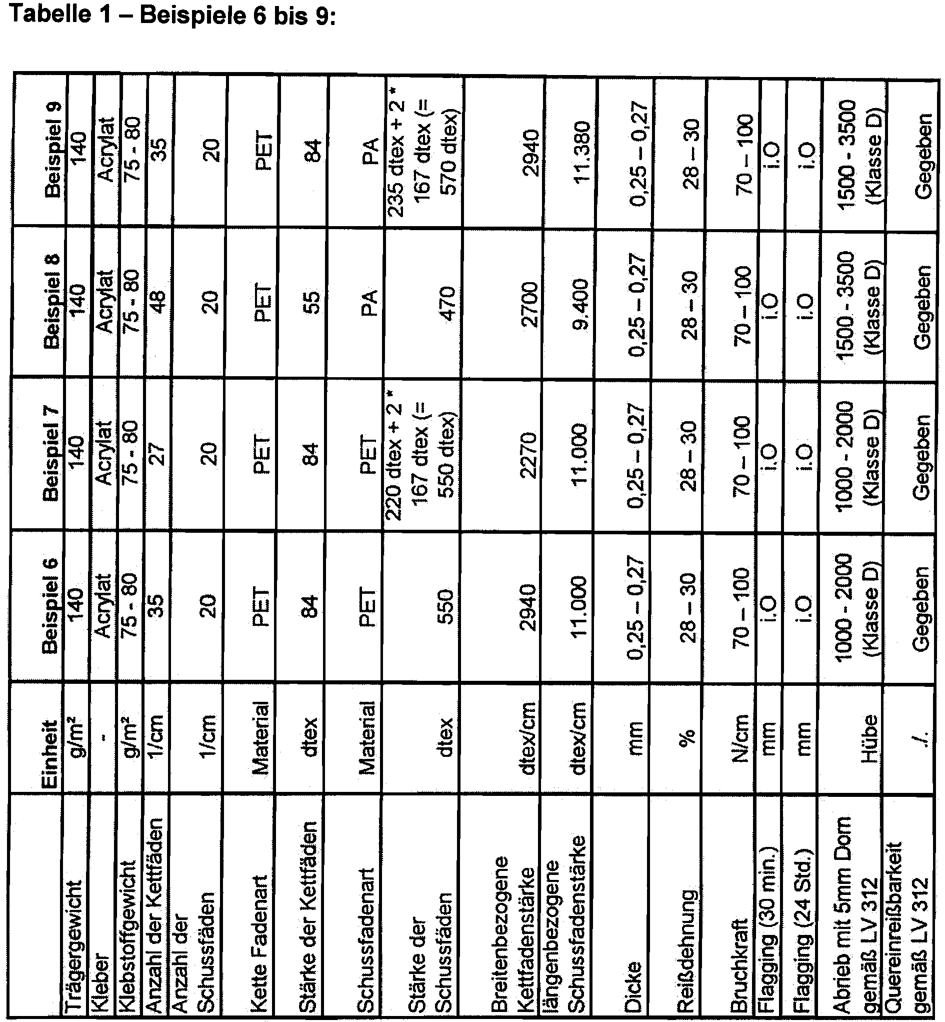

In der nachfolgenden Tabelle 2 sind zwei auf dem Markt befindliche Gewebeklebebänder aufgeführt, woraus sich ergibt, dass das Klebeband gemäß EP 1 990 393 A1 eine geringe Abriebfestigkeit, nämlich die der Klasse B besitzt, wohingegen das Klebeband gemäß Coroplast 837 X eine hohe Abriebfestigkeit, nämlich gemäß Klasse D aufweist, jedoch nicht quereinreißbar von Hand ist. Das erfindungsgemäße Klebeband gemäß Beispiel 8 und 9 der Tabelle 1, verbindet demgegenüber eine gute Quereinreißbarkeit von Hand mit einer hohen Abriebfestigkeit, insbesondere gemäß Klasse D.

**Tabelle 2:**

| | **Einheit** | **Coroplast 839** EP 1990393 A1 | **Coroplast 837 X** |
|---|---|---|---|
| Trägergewicht | g/m² | 115 - 118 | 130 |
| Kleber | - | Acrylat | Acrylat |
| Klebstoffgewicht | g/m² | 42 - 48 | 80 - 100 |
| Anzahl der Kettfäden | 1/cm | 48 | 45 |
| Anzahl der Schussfäden | 1/cm | 30 | 25 |
| Stärke der Kettfäden | dtex | 55 | 167 |
| Stärke der Schussfäden | dtex | 334 bzw. 167 (2x) | 167 |
| Breitenbezogene Kettfadenstärke | dtex/cm | 2700 | 7500 |
| Längenbezogene Schussfadenstärke | dtex/cm | 10.000 | 4100 |
| Dicke | mm | 0,18 - 0,21 | 0,24 - 0,27 |
| Reißdehnung | % | 20 - 50 | 30 - 60 |
| Bruchkraft | N/cm | 65 - 100 | 210 - 320 |
| Abrieb mit 5mm Dorn gemäß LV 312 | Hübe | 100 - 499 (Klasse B) | 1000 - 2000 (Klasse D) |
| Quereinreißbarkeit | ./. | gegeben | nicht gegeben |

Das erfindungsgemäße Klebeband, wie es in den Ansprüchen sowie in den erfindungsgemäßen Ausführungsbeispielen gemäß Beispiel 8 und 9 beschrieben ist, besitzt eine Abriebbeständigkeit der Klassen C und D gemäß LV 312, eine gute Schmiegsamkeit bzw. ein gutes Flaggingverhalten, wie in der Tabelle 1 dargestellt. Durch eine optionale Kalandrierung und Verfestigung des Gewebeträgers 1 besitzt der erfindungsgemäße Gewebeträger 1 eine elektrische Durchschlagsfestigkeit von > 1.000 Volt. Da auf Grund der erfindungsgemäßen Ausbildung des Gewebeträgers 1 bereits eine ausreichende Stabilität des Gewebeträgers 1 erreicht wird, kann eine Beschichtung der Klebebeschichtung 4 im Düsenverfahren oder aber auch im Curtain-Coating-Verfahren erfolgen, denn erfindungsgemäß ist es nicht erforderlich, dass die Klebstoffschicht zur Fixierung der Kett- und Schussfäden 2, 3 an ihren Kreuzungsstellen untereinander tief in den Gewebeträger 1 eindringt. Vielmehr ist es erfindungsgemäß so, dass die Klebebeschichtung 4 auf Grund des gewählten Auftragungsverfahrens auf den Kettfäden 2 und den Schussfäden 3 im Wesentlichen nur oberflächlich aufliegt, so dass das Klebematerial nur eine geringe Eindringtiefe in das Fadenmaterial bzw. in den Gewebeträger 1 besitzt. Zusätzlich kann erfindungsgemäß vorgesehen sein, dass eine Versiegelung des Gewebeträgers 1 mit einem Acrylat-Deckstrich abschließend erfolgt. Zudem ist auf Grund einer Reißdehnung in % von 28 bis 30 eine gute Handeinreißbarkeit vorhanden, wobei eine Bruchkraft von 70 bis 100 N/cm nicht überschritten wird.

## Patentansprüche

1. Handeinreißbares, abriebfestes Gewebeklebeband, insbesondere Kabelwickelband, bestehend aus einem bandförmigen Gewebeträger (1) mit einer mindestens einseitigen Klebebeschichtung (4), wobei der Gewebeträger (1) aus Kettfäden (2) und aus Schussfäden (3) hergestellt ist und die Fadenstärke (Titer) in dtex der Schussfäden (3) größer ist als die Fadenstärke (Titer) in dtex der Kettfäden (2) sowie die auf die Breite bezogene Fadenstärke in dtex/cm der Kettfäden (2) kleiner ist als die auf die Länge bezogene Fadenstärke in dtex/cm der Schussfäden (3), wobei jeweils die auf die Breite bezogene Fadenstärke der Kettfäden (2) im Bereich von 2.000 dtex/cm bis 4.000 dtex/cm und die auf die Länge bezogene Fadenstärke der Schussfäden (3) im Bereich von 8.000 dtex/cm bis 16.000 dtex/cm liegt,
**dadurch gekennzeichnet, dass** die Klebebeschichtung (4) derart ausgebildet ist, dass nur eine Oberflächenbeschichtung vorhanden ist, so dass die Kett- und Schussfäden (2, 3) nicht durch die Klebebeschichtung (4) gegeneinander an ihren Kreuzungsstellen fixiert sind, wobei,
wenn die Kettfäden (2) aus Polyethylenterephtalat und die Schussfäden (3) aus Polyamid bestehen und die Klebebeschichtung (4) aus einem Acrylat besteht und das Trägergewicht 140 g/m² beträgt, sowie das Klebstoffgewicht im Bereich von 75 bis 80 g/m² liegt, wobei die Anzahl der Schussfäden (3) 20 pro cm Länge beträgt,
- wobei bei einer Stärke der Schussfäden (3) von 470 dtex, die längenbezogene Schussfadenstärke bei 9400 dtex/cm liegt, und wobei bei einer Anzahl der Kettfäden (2) von 48 pro cm Breite und einer Stärke der Kettfäden (2) von 55 dtex, die breitenbezogene Kettfadenstärke bei 2700 dtex/cm liegt,
oder
- wobei bei einer Stärke der Schussfäden (3) von 570 dtex, die Schussfäden (3) aus drei Einzelfäden gebildet sind, wobei ein Einzelfaden eine Stärke von 235 dtex und zwei Einzelfäden eine Stärke von 167 dtex aufweisen, wobei die längenbezogene Schussfadenstärke bei 11380 dtex/cm liegt, und wobei bei einer Anzahl der Kettfäden (2) von 35 pro cm Breite und einer Stärke der Kettfäden (2) von 84 dtex die breitenbezogene Kettfadenstärke bei 2940 dtex/cm liegt,
eine Abriebbeständigkeit der Klasse D gemäß LV 312 - gemessen am 5-mm-Dorn - vorliegt, die durch eine Anzahl von Hüben im Bereich von 1500 bis 3500 gekennzeichnet ist.

2. Gewebeklebeband nach Anspruch 1,
**dadurch gekennzeichnet, dass** die Kett- und/oder Schussfäden (2, 3) aus Filamentgarnen bestehen.

3. Gewebeklebeband nach Anspruch 1 oder 2,
**dadurch gekennzeichnet, dass** die Kett- und/oder Schussfäden (2, 3) im Garnverwirbelungsverfahren (Intermingling) hergestellt sind.

4. Gewebeklebeband nach einem der Ansprüche 1 bis 3,
**dadurch gekennzeichnet, dass** die Kett- und/oder Schussfäden (2, 3) aus glatten und/oder texturierten Fäden bestehen.

## Claims

1. A hand-tearable, abrasion-resistant fabric adhesive tape, in particular cable winding tape, consisting of a tape-form fabric backing (1) with an adhesive coating (4) at least on one side, wherein the fabric backing (1) is produced from warp threads (2) and from weft threads (3) and the thread weight (titre) in dtex of the weft threads (3) is greater than the thread weight (titre) in dtex of the warp threads (2), and the thread weight, relative to the width, in dtex/cm of the warp threads (2) is smaller than the thread weight, relative to the length, in dtex/cm of the weft threads (3), wherein in each case the thread weight, relative to the width, of the warp threads (2) lies in the range from 2,000 dtex/cm to 4,000 dtex/cm and the thread weight, relative to the length, of the weft threads (3) lies in the range from 8,000 dtex/cm to 16,000 dtex/cm,
**characterised in that** the adhesive coating (4) is formed such that only one surface coating is present, so that the warp and weft threads (2, 3) are not fixed against one another at their crossing points by the adhesive coating (4), wherein,
if the warp threads (2) consist of polyethylene terephthalate and the weft threads (3) of polyamide, and the adhesive coating (4) consists of an acrylate and the backing weight is 140 g/m², and the adhesive weight lies in the range from 75 to 80 g/m², the number of weft threads (3) being 20 per cm of length,
- with, for a weight of the weft threads (3) of 470 dtex, the length-related weft-thread weight being at 9400 dtex/cm, and with, for a number of the warp threads (2) of 48 per cm of width and a weight of the warp threads (2) of 55 dtex, the width-related warp-thread weight being at 2700 dtex/cm,
or
- with, for a weight of the weft threads (3) of 570 dtex, the weft threads (3) being formed from three monofilaments, with one monofilament having a weight of 235 dtex and two monofilaments having a weight of 167 dtex, with the length-related weft-thread weight being at 11,380 dtex/cm, and with, for a number of the warp threads (2) of 35 per cm of width and a thickness of the warp threads (2) of 84 dtex, the width-related warp-thread weight being at 2940 dtex/cm,
an abrasion resistance of Class D according to LV 312 - measured on a 5 mm mandrel - exists, which is **characterised by** a number of strokes in the range from 1500 to 3500.

2. A fabric adhesive tape according to Claim 1, **characterised in that** the warp and/or weft threads (2, 3) consist of filament yarns.

3. A fabric adhesive tape according to Claim 1 or 2, **characterised in that** the warp and/or weft threads (2, 3) are produced in a yarn interlacing method (intermingling).

4. A fabric adhesive tape according to one of Claims 1 to 3, **characterised in that** the warp and/or weft threads (2, 3) consist of smooth and/or textured threads.

## Revendications

1. Bande adhésive de tissu pouvant être déchirée à la main et résistante à l'abrasion, en particulier bande d'enroulement de câble, constituée d'un tissu de support (1) en forme de bande pourvu d'un revêtement adhésif (4) au moins unilatéral, le tissu de support (1) étant composé de fils de chaîne (2) et de fils de trame (3) et l'épaisseur de fil (titre) en dtex des fils de trame (3) étant supérieure à l'épaisseur de fil (titre) en dtex des fils de chaîne (2) et l'épaisseur de fil par rapport à la largeur en dtex/cm des fils de chaîne (2) étant inférieure à l'épaisseur de fil par rapport à la longueur en dtex/cm des fils de trame (3), respectivement l'épaisseur de fil par rapport à la largeur des fils de chaîne (2) se situant dans la plage allant de 2 000 dtex/cm à 4 000 dtex/cm et l'épaisseur de fil par rapport à la longueur des fils de trame (3) se situant dans la plage allant de 8 000 dtex/cm à 16 000 dtex/cm,
**caractérisée en ce que** le revêtement adhésif (4) est réalisé de telle manière que seul un revêtement superficiel est présent, de sorte que les fils de chaîne et de trame (2, 3) ne sont pas fixés les uns contre les autres au niveau de leurs points de croisement par le revêtement adhésif (4),
lorsque les fils de chaîne (2) sont constitués de polyéthylène téréphtalate et que les fils de trame (3) sont constitués de polyamide et que le revêtement adhésif (4) est constitué d'un acrylate et que le poids de support atteint 140 g/m², et que le poids de l'adhésif se situe dans la plage de 75 à 80 g/m², le nombre des fils de trame (3) atteignant 20 par cm de longueur,
- dans laquelle pour une épaisseur des fils de trame (3) de 470 dtex, l'épaisseur de fil de trame par rapport à la longueur est de 9400 dtex/cm, et dans laquelle pour un nombre de fils de chaîne (2) de 48 par cm de largeur et une épaisseur des fils de chaîne (2) de 55 dtex, l'épaisseur de fil de chaîne par rapport à la largeur est de 2700 dtex/cm,
ou
- dans laquelle pour une épaisseur des fils de trame (3) de 570 dtex, les fils de trame (3) sont constitués de trois fils simples, un fil simple présentant une épaisseur de 235 dtex et deux fils simples présentant une épaisseur de 167 dtex, l'épaisseur de fil de trame par rapport à la longueur étant de 11 380 dtex/cm, et dans laquelle pour un nombre de fils de chaîne (2) de 35 par cm de largeur et une épaisseur des fils de chaîne (2) de 84 dtex, l'épaisseur de fil de chaîne par rapport à la largeur est de 2 940 dtex/cm,
une résistance à l'abrasion de catégorie D selon la norme LV312, mesurée sur un mandrin de 5 mm, étant présente, laquelle se **caractérise par** un certain nombre de courses compris dans la plage allant de 1500 à 3500.

2. Bande adhésive de tissu selon la revendication 1,
**caractérisée en ce que** les fils de chaîne et/ou de trame (2, 3) sont constitués de fils continus.

3. Bande adhésive de tissu selon la revendication 1 ou 2,
**caractérisée en ce que** les fils de chaîne et/ou de trame (2, 3) sont produits au cours d'un procédé d'entremêlement.

4. Bande adhésive de tissu selon l'une quelconque des revendications 1 à 3,
**caractérisée en ce que** les fils de chaîne et/ou de trame (2, 3) sont constitués de fils lisses et/ou texturés.
